(19) Europäisches Patentamt / European Patent Office / Office européen des brevets

(11) **EP 1 145 346 B1**

(12) **EUROPÄISCHE PATENTSCHRIFT**

(45) Veröffentlichungstag und Bekanntmachung des Hinweises auf die Patenterteilung:
**28.02.2007 Patentblatt 2007/09**

(51) Int Cl.:
*H01M 4/52* (2006.01)  *C01G 53/00* (2006.01)
*C01G 53/04* (2006.01)

(21) Anmeldenummer: **99963528.7**

(22) Anmeldetag: **14.12.1999**

(86) Internationale Anmeldenummer:
**PCT/EP1999/009912**

(87) Internationale Veröffentlichungsnummer:
**WO 2000/039865 (06.07.2000 Gazette 2000/27)**

(54) **NICKEL-MISCHHYDROXID, VERFAHREN ZU DESSEN HERSTELLUNG UND DESSEN VERWENDUNG ALS KATHODENMATERIAL IN ALKALISCHEN BATTERIEN**

NICKEL MIXED HYDROXIDE, METHOD FOR PRODUCING THE SAME, AND THE USE THEREOF AS A CATHODE MATERIAL IN ALKALINE BATTERIES

HYDROXYDE MIXTE DE NICKEL, SON PROCEDE DE FABRICATION ET SON UTILISATION COMME MATERIAU CATHODE DANS LES PILES ALCALINES

(84) Benannte Vertragsstaaten:
**DE DK ES FR GB SE**

(30) Priorität: **24.12.1998 DE 19860143**
**18.08.1999 DE 19939025**

(43) Veröffentlichungstag der Anmeldung:
**17.10.2001 Patentblatt 2001/42**

(73) Patentinhaber: **H.C. Starck GmbH & Co. KG**
**38642 Goslar (DE)**

(72) Erfinder:
• **STOLLER, Viktor**
**D-38667 Bad Harzburg (DE)**
• **OLBRICH, Armin**
**D-38723 Seesen (DE)**
• **MEESE-MARKTSCHEFFEL, Juliane**
**D-38640 Goslar (DE)**
• **WOHLFAHRT-MEHRENS, Margret**
**D-89257 Illertissen (DE)**
• **AXMANN, Peter**
**D-37085 Göttingen (DE)**
• **DITTRICH, Herbert**
**D-73650 Winterbach (DE)**
• **KASPER, Michael**
**D-89257 Illertissen (DE)**
• **STRÖBELE, Sandra**
**D-89231 Neu-Ulm (DE)**

(74) Vertreter: **Clauswitz, Kai-Uwe Wolfram et al**
**H. C. Starck GmbH & Co. KG**
**Im Schleeke 78-91**
**38642 Goslar (DE)**

(56) Entgegenhaltungen:
**EP-A- 0 390 677**

• **CHEMICAL ABSTRACTS, vol. 130, no. 5, 1998 Columbus, Ohio, US; abstract no. 54866, I. MATSUBARA, M. UEDA: "MANUFACTURE OF LITHIUM NICKEL OXIDE AND CATHODE ACTIVE MASS USING IT FOR SECONDARY LITHIUM BATTERY" XP002135820 & JP 10 316431 A (FUJI CHEMICAL INDUSTRY CO. LTD. JAPAN) 2. Dezember 1998 (1998-12-02)**
• **CHEMICAL ABSTRACTS, vol. 128, no. 24, 15. Juni 1998 (1998-06-15) Columbus, Ohio, US; abstract no. 297106, TAKESHI, U., T. MAKINO, T. IIDA: "HIGH DENSITY NICKEL HYDROXIDE FOR ALKALINE STORAGE BATTERY CATHODE ACTIVE MATERIAL AND ITS MANUFACTURE" XP002135821 & JP 10 097856 A (TANAKA KAGAKU KENKYUSHO K.K. JAPAN) 14. April 1998 (1998-04-14)**
• **H. C. ZENG, Z.P. XU, M. QIAN: "SYNTHESIS OF NON-AL-CONTAINING HYDROTALCITE-LIKE COMPOUND Mg0.3Co(II)0.6Co(III)0.2(OH)2(NO3)0.2*H20" CHEM. MATER, Bd. 10, 1998, Seiten 2277-2283, XP000776653**

EP 1 145 346 B1

**Beschreibung**

Die vorliegende Erfindung betrifft ein Nickel-Mischhydroxid mit Ni als Hauptelement und mit einer aufgeweiteten Schichtstruktur, ein Verfahren zu dessen Herstellung durch Kopräzipitation der Hydroxide in alkalischem Medium sowie dessen Verwendung als Kathodenmaterial in alkalischen Batterien.

β-Nickel(II)-hydroxid wird in alkalischen Akkumulatoren als positive Elektrodenmasse verwendet. Veränderungen bestimmter elektrochemischer Eigenschaften können durch den Einbau von Fremdionen erzielt werden.

Der Einbau dreiwertiger Ionen in die Nickelhydroxidmatrix in molaren Anteilen > 20 Mol-% führt zu einer neuen Struktur. Die so veränderten Materialien haben die Struktur des Hydrotalcit und zeichnen sich gegenüber β-Ni(OH)$_2$ durch eine aufgeweitete Schichtstruktur aus, in deren Zwischenschichten Wasser und verschiedene Anionen vorliegen. Die Schichtaufweitung allein hat grundsätzlichen Einfluß auf die Elektrochemie, in diesem Fall auf die Potentiallage und elektrochemische Nutzbarkeit der Nickelionen. Das jeweils verwendete dreiwertige Kation übt zusätzlichen Einfluß auf das elektrochemische Verhalten der Materialien aus.

So sind einfach substituierte Varianten, die als Substituenten Fe, Mn, Co und Al enthalten, aus der Literatur bekannt. Die meisten weisen eine verbesserte Nutzung der Nickelionen bei jedoch nicht sehr ausgeprägter Stabilität auf. Andere hingegen haben zwar eine gute Zyklenstabilität, jedoch liegt die Nickelnutzung niedriger.

Auch die Substitution mit einer Kombination zweier verschiedener Kationen findet sich in der Literatur. So beschreibt die EP 0 793 285 A1 Nickelhydroxid-Materialien, die beispielsweise die Elemente Co oder Mn in Kombination mit Elementen wie z.B. Fe, Al, La und anderen enthalten. Co und Mn werden bei der Herstellung der Materialien in zweiwertiger Form eingesetzt, wobei im weiteren Verlauf der Herstellung keine Oxidationsmittel verwendet werden. Bei der Herstellung durch elektrochemische (kathodische) Abscheidung findet die Ausfällung durch begleitende Wasserstoffentwicklung sogar in reduktiver Umgebung statt. Im fertigen Aktivmaterial liegt daher Co in zweiwertiger Form vor, zusammen mit dreiwertigen Kationen wie Fe, Al, La u.a.. Die Materialien werden zwar im Hinblick auf ihre Potentiallage beim Entladeprozeß und die Ladungsaufnahme bei höheren Temperaturen untersucht und beurteilt. Angaben zur Zyklenstabilität und tatsächlichen elektrochemischen Nutzbarkeit in Form von absoluten Werten fehlen vollständig. Es sind lediglich relative Kapazitäten angegeben.

In der EP 0 712 174 A2 sind Nickelhydroxide beschrieben, in denen im Unterschied zu EP 0 793 285 A1 an Stelle zweiwertiger dreiwertige Mn-Ionen als Substituenten, in Kombination mit anderen dreiwertigen Elementen wie Al, Fe und Co, eingesetzt werden. Im Produkt liegt Mn in dreiwertiger Form zusammen mit Al, Fe oder Co vor, wobei möglicherweise Mn auch gleichzeitig in mehreren Oxidationsstufen nebeneinander ("gemischtvalent") im Festkörper vorhanden sein kann. Diese Mnhaltigen Materialien zeigen ausgeprägte Zyklenstabilität, die Nickelausnutzung liegt jedoch nur wenig über der herkömmlicher Nickelhydroxide. Praktisch verwertbare Hinweise, daß der Einsatz anderer gemischtvalenter Systeme als Mn zu einer Verbesserung von Kapazität und Nickelausnutzung führen kann, sind diesem Stand der Technik nicht zu entnehmen.

Der vorliegenden Erfindung liegt die Aufgabe zugrunde, ein Nickel-Mischhydroxid zur Verfügung zu stellen, das bei guter Zyklenstabilität eine deutliche Verbesserung in der elektrochemischen Ausnutzung der Nickelionen und der massenbezogenen Kapazität zeigt. Ferner soll ein einfaches Verfahren zur Herstellung eines solchen Nickel-Mischhydroxids angegeben werden.

Diese Aufgabe wird durch ein Nickel-Mischhydroxid gemäß Anspruch 1 gelöst. Vorteilhafte Ausgestaltungen des erfindungsgemäßen Nickel-Mischhydroxids sind in den Unteransprüchen 2 bis 6 angegeben.

Gegenstand der Erfindung ist somit ein Nickel-Mischhydroxid mit Ni als Hauptelement und mit einer Schichtstruktur, umfassend

a) mindestens ein Element M$_a$ aus der Gruppe Fe, Cr, Co, Ti, Zr und Cu, das in zwei unterschiedlichen Oxidationsstufen, die sich hinsichtlich der Anzahl der Außenelektronen um ein Elektron unterscheiden, vorliegt; und der Oxidationsgrad α des gemischtvalent vorliegenden Elements M$_a$, definiert gemäß der folgenden Formel (I), im Bereich von 0,25 bis 0,75, liegt:

$$\alpha = \frac{M_a^{+(x+1)}}{M_a^{+(x+1)} + M_a^{+x}} \qquad \text{(I)},$$

worin $M_a^{+(x+1)}$ die Molmenge des Elements M$_a$ in der höheren Oxidationsstufe, $M_a^{+(x)}$ die Molmenge des Elements M$_a$ in der niedrigeren Oxidationsstufe und x eine Zahl zwischen 1 und 3 bedeuten.

b) mindestens ein in der 3-wertigen Oxidationsstufe vorliegendes Element $M_b$ aus der Gruppe B, Al, Ga, In und Se (Seltenerdmetalle, vorzugsweise Sc, Y oder La);

c) wahlweise mindestens ein in der 2-wertigen Oxidationsstufe vorliegendes Element $M_c$ aus der Gruppe Mg, Ca, Sr, Ba und Zn;

d) neben dem Hydroxid, mindestens ein zusätzliches Anion aus der Gruppe Halogenide (vorzugsweise Fluorid oder Chlorid), Carbonat, Sulfat, Acetat, Oxalat, Borat und Phosphat in einer mindestens zur Wahrung der Elektroneutralität des Mischhydroxids ausreichenden Menge; und

e) Hydratationswasser in einer die jeweilige Struktur des Mischhydroxids stabilisierenden Menge.

Überraschenderweise hat sich gemäß der Erfindung gezeigt, daß gerade dann besonders zyklenstabile Nickel-Mischhydroxide mit deutlich gesteigerter Nickelausnutzung erhalten werden, wenn außer Nickel noch mindestens zwei weitere Kationen in der Nickelhydroxidmatrix vorhanden sind, von denen das eine ($M_a$) aus der Gruppe Fe, Cr, Co, Ti, Zr und Cu gewählt ist, wobei dieses in zwei unterschiedlichen Oxidationsstufen, die sich hinsichtlich der Anzahl der Außenelektronen um ein Elektron unterscheiden, das heißt in definiert gemischtvalenter Form, vorliegt, und das andere ($M_b$) aus der Gruppe B, Al, Ga, In und SE (Seltenerdmetalle) in der fixen 3-wertigen Oxidationsstufe vorliegt.

In Halbzellentests zeigt ein solches Material sehr gute Zyklenstabilität, wobei eine maximale elektronische Ausnutzung von 1,5 Elektronen pro Nickelion erreicht wird.

In Vollzellentests zeigt dieses Material bei einer Messung über 100 Zyklen eine Ausnutzung von konstant 1,5 Elektronen pro Nickelion, was einer spezifischen Kapazität von mehr als 260 mAh/g entspricht.

Die erfindungsgemäßen Nickelhydroxidmaterialien übertreffen solche, in denen die beiden Zusatzkationen (Ni-Substituenten), wie in EP 0 793 285 A1 beschrieben, in jeweils einheitlicher Oxidationsstufe vorliegen, wie ein elektrochemischer Vergleich im nachfolgenden Beispielteil zeigt. Sie übertreffen auch solche Nickelhydroxidmaterialien, bei denen gemäß der EP 0 712 174 A2 ein Zusatzkation beispielsweise 3 wertiges Al oder Co und das andere Zusatzkation Mn ist, das gleichzeitig in unterschiedlichen Oxidationsstufen nebeneinander vorliegen kann.

Die erfindungsgemäßen Nickelhydroxidmaterialien können in für den Einsatz in Sekundärbatterien günstigen Dichten hergestellt werden, die denen von β-Nickelhydroxiden regulärer Morphologie entsprechen.

Ohne an eine bestimmte Theorie gebunden zu sein, kann angenommen werden, daß mehrere Effekte für diese Verbesserungen verantwortlich gemacht werden können:

1. Es wird angenommen, daß beim Vorliegen der verschiedenen Ni-Substituenten $M_b$(III), $M_a$(III) und $M_a$(II) in dem Material Gitterstörungen entstehen. Liegt beispielsweise das Element $M_a$ in den Oxidationsstufen (III)/(II) vor, läßt sich über das $M_a$(III)/$M_a$(II)-Verhältnis der Anteil der dreiwertigen Kationen und damit die Ladung der Hauptschicht steuern. Mit dieser hängen Anionen- und Wassergehalt der Struktur zusammen. Bei Hydrotalcitverbindungen sind die Anionen in der Zwischenschicht rein elektrostatisch gebunden. Liegt, wie im erfindungsgemäßen Material, ein Substituent aber zu einem definierten Anteil auch in zweiwertiger Form vor, so ist verstellbar, daß in diesen Domänen die Anionen (beim Vorliegen der α-Struktur) wie in basischen Salzen gebunden, d.h. direkt mit der Hauptschicht verknüpft sein können. Hierdurch werden anisotrope Gitterstörungen induziert (u.a. Schichtverschiebungen), die sich positiv auf die Aktivität des Materials auswirken können. Auch bei elektrochemischer Belastung bleiben Gitterfehler der Ausgangsstruktur und damit die Aktivität der Masse über längere Zeit erhalten.

2. Möglich ist auch, daß z.B. Co(II)-Ionen, die sich in den Randbereichen befinden, bei Anwendung des Materials als Elektrodenmasse in der Elektrode über einen Lösungs-Rekristallisationsprozeß eine Art Cobaltbeschichtung auf der Partikeloberfläche ausbilden könnten, was, neben den oben genannten Überlegungen, die Verbesserung der elektrochemischen Eigenschaften über eine Erhöhung der elektronischen Leitfähigkeit erklären kann.

Bevorzugt beträgt der Anteil des Ni in dem erfindungsgemäßen Nickel-Mischhydroxid 60 bis 92 Mol-%, weiter bevorzugt 65 bis 85 Mol-% und insbesondere bevorzugt 75 bis 80 Mol-%. In anderen Worten beträgt der Gesamtanteil der Elemente $M_a$, $M_b$ und $M_c$ bevorzugt 40 bis 8 Mol-%, weiter bevorzugt 35 bis 15 Mol-% und insbesondere bevorzugt 25 bis 20 Mol-%, jeweils bezogen auf die Gesamtmenge an Ni, $M_a$, $M_b$ und $M_c$.

Der Anteil des gemischtvalent vorliegenden Metalls $M_a$ beträgt bevorzugt 10 bis 40 Mol-%, weiter bevorzugt 20 bis 30 Mol-%, bezogen auf die Gesamtmenge der Elemente $M_a$, $M_b$ und $M_c$.

Der Anteil des wahlweise eingesetzten Dotierungselements $M_c$ beträgt vorzugsweise 1 bis 30 Mol-%, bezogen auf die Gesamtmenge der Elemente $M_a$, $M_b$ und $M_c$; jedoch maximal 5 Mol-%, bezogen auf die Gesamtmenge der Elemente Ni, $M_a$, $M_b$ und $M_c$.

Besonders bevorzugt beträgt der Anteil der dreiwertigen Elemente $M_b$ mehr als 60 Mol-%, bezogen auf die

Gesamtmenge der Elemente $M_a$, $M_b$ und $M_c$.

Die erfindungsgemäßen Nickel-Mischhydroxide werden geeigneterweise in Pulverform vorgesehen, wobei die durchschnittliche Teilchengröße der Pulver vorzugsweise 0,5 bis 1000 $\mu$m, besonders bevorzugt 2 bis 100 $\mu$m beträgt, insbesondere bevorzugt mehr als 3 $\mu$m, weiter bevorzugt 3-15 $\mu$m.

Gegenstand der Erfindung ist weiterhin ein Verfahren zur Herstellung der oben beschriebenen Nickel-Mischhydroxide, umfassend das Umsetzen der zur Erzielung der jeweiligen Mischhydroxide erforderlichen Reaktionskomponenten in Form von wasserlöslichen Salzen des Ni und der Elemente $M_a$, $M_b$ und wahlweise $M_c$ in einem basischen, wäßrigen Medium zur Kopräzipitation hydroxidischer Reaktionsprodukte unter Bildung einer homogenen Suspension dieser Reaktionsprodukte, wobei entweder wasserlösliche Salze des Elements $M_a$ in unterschiedlichen Oxidationsstufen eingesetzt werden oder ein wasserlösliches Salz des Elements $M_a$ in der niedrigeren Oxidationsstufe eingesetzt und eine partielle Oxidation bis zum Erreichen des erwünschten Verhältnisses zwischen den unterschiedlichen Oxidationsstufen des Elements $M_a$ durchgeführt wird oder ein wasserlösliches Salz des Elements $M_a$ in der höhereren Oxidationsstufe eingesetzt und eine partielle Reduktion bis zum Erreichen des erwünschten Verhältnisses zwischen den unterschiedlichen Oxidationsstufen des Elements $M_a$ durchgeführt wird, Abtrennen von der Mutterluage, Waschen und Trocknen der Reaktionsprodukte.

Die erfindungsgemäßen Mischhydroxide können sowohl in sphärischer als auch regulärer (nicht-sphärischer) Morphologie hergestellt werden, wobei im erstgenannten Fall die Umsetzung vorteilhafterweise in Gegenwart von Ammoniak oder Ammoniumsalzen durchgeführt wird.

Die Umsetzung muß unter basischen Bedingungen, vorzugsweise bei einem pH im Bereich von 8 bis 13, durchgeführt werden.

Im Falle der Durchführung einer partiellen Oxidation des Elements $M_a$ können für derartige Anwendungen bekannte Oxidationsmittel eingesetzt werden, wobei vorzugsweise Sauerstoff, $H_2O_2$, Hypochlorit oder Peroxodisulfate verwendet werden. Vorteilhafterweise kann die partielle Oxidation durch einen gesteuerten Eintrag von Sauerstoff in die sich bildende Suspension durchgeführt werden. Allgemein ist für die partielle Oxidation ein unterstöchiometrischer Einsatz von Oxidationsmitteln sinnvoll. Das erwünschte Verhältnis zwischen den unterschiedlichen Oxidationsstufen des Elementes $M_a$ kann durch eine Variation des Sauerstoffangebots (beispielsweise durch Zumischung von Reinsauerstoff zur Beeinflussung des Sauerstoffpartialdrucks), der Reaktionstemperatur und/oder des pH-Wertes gesteuert werden.

Im Falle von beispielsweise Co gelingt eine partielle Oxidation in vorteilhafter Weise durch gezielten Einsatz von Luftsauerstoff.

Im Falle von beispielsweise Fe können wasserlösliche Salze beider Oxidationsstufen bereits nebeneinander eingesetzt werden.

Im Falle der Durchführung einer partiellen Reduktion des Elements $M_a$ können für derartige Anwendungen bekannte Reduktionsmittel eingesetzt werden.

Bei Anwendung einer diskontinuierlichen Verfahrensführung (Batchprozeß) ist es zweckmäßig, nach beendeter Kopräzipitation eine Alterung über mehrere Stunden, beispielsweise 15 bis 20 Stunden, durchzuführen, bevor die weitere Aufarbeitung erfolgt.

Bei kontinuierlicher Verfahrensführung wird geeigneterweise die Verweilzeit so eingestellt, daß der erwünschte, gemischtvalente Zustand des Elements $M_a$ erreicht wird. Mittlere Verweilzeiten von mehreren Stunden, beispielsweise 5 Stunden, haben sich hierbei als zweckmäßig erwiesen.

Nach einem weiter bevorzugten Verfahren werden die erfindungsgemäßen Misch-Nickelhydroxide durch anodische Oxidation mindestens eines der Metall-Elemente hergestellt, insbesondere bevorzugt mindestens der Nickelkomponente. Hierzu wird die wäßrige Fällungssuspension kontinuierlich zwischen einer Elektrolysezelle mit Nickelanode und einem außerhalb der Zelle angeordneten Thermostaten umgepumpt. Im Kreislauf außerhalb der Elektrolysezelle werden die weiteren Metallkomponenten in Form ihrer wasserlöslichen Salze sowie Alkalihydroxid, vorzugsweise Natriumhydroxid, zur pH-Wert-Einstellung in die Fällungssuspension gegeben. Ferner wird in den Umpumpkreislauf das Oxidationsmittel, vorzugsweise Luftsauerstoff, zur Einstellung des Oxidationsgrades des $M_a$-Elementes eingeleitet. Mittels eines Überlaufs wird kontinuierlich oder periodisch Fällungssuspension ausgeschleust, Fällungsprodukt abfiltriert, gewaschen, getrocknet und gegebenenfalls gemahlen.

Die zur Gewährleistung der Elektroneutralität in das Fällungsprodukt eingebauten Anionen können anschließend durch Behandlung des Fällungsproduktes in einer Alkalicarbonat- oder Alkalihydrogencarbonatlösung, bevorzugt $Na_2CO_3$-Lösung, gegen die bevorzugten $CO_3$-Anionen ausgetauscht werden.

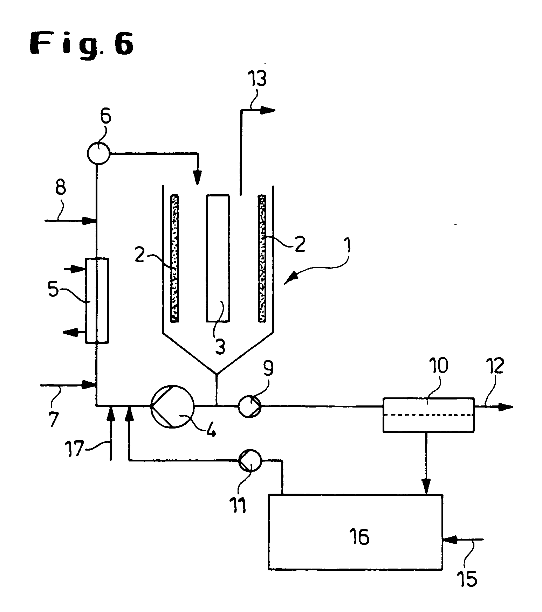

Eine Vorrichtung zur elektrolytischen Herstellung von Nickel-Mischhydroxid ist schematisch in Fig. 6 dargestellt:

Figur 6 zeigt eine Elektrolysezelle 1, die zwei Kathoden 2 und eine Anode 3 enthält. Die Elektrolysesole wird im Boden der Zelle 1 über die Pumpe 4, den Wärmeaustauscher 5 sowie die pH-Sonde 6 umgepumpt. In den Umpumpkreislauf wird, wie durch Pfeil 7 angedeutet, in Abhängigkeit von der pH-Messung 6 Alkalihydroxid bzw. Salzsäure zudosiert. Aus dem Umpumpkreislauf wird mittels Pumpe 9 Nickelhydroxid-Suspension ausgeschleust und der Feststoffabtrennvorrichtung 10 zugeführt. Der Feststoff wird, wie durch Pfeil 12 angedeutet, ausgeschleust. Die von Feststoff befreite Sole kann über die Elektrolytaufarbeitung 16 gegebenenfalls unter Wasserzugabe 15 mittels Pumpe 11 in den Umpumpkreislauf zurückgeführt werden. Ferner ist, wie durch Pfeil 17 angedeutet, eine Einleitmöglichkeit für das Oxidationsmittel vorgesehen. Durch die Einleitung 8 werden ferner Dotiersalzlösungen in den Umpumpkreislauf eingeleitet. Nach einer bevorzugten Ausführungsform ist die Abtrennvorrichtung 10 in Form einer Siebzentrifuge ausgebildet, die so gefahren wird, daß feinteilige Nickelhydroxid-Teilchen mit dem Filtrat über Pumpe 11 in den Umpumpkreislauf zurückgeführt werden. Während der Elektrolyse erzeugtes Wasserstoffgas wird oberhalb des Füllvolumens der Zelle, wie durch Pfeil 13 angedeutet, abgezogen.

In den Zeichnungen zeigen:

Fig. 1 das Zyklenverhalten der in den Beispielen erhaltenen Probe A und der Vergleichsproben E, F, N und V im Halbzellentest;

Fig. 2 die Ladekurve der Probe A im 10. Zyklus;

Fig. 3 die Entladekurve der Probe A um 10. Zyklus; und

Fig. 4 das Röntgenbeugungsspektrum der Probe A.

Das erfindungsgemäße Nickel-Mischhydroxid wird vorzugsweise als Bestandteil von Kathodenmassen in alkalischen Batterien, wie in Ni/Cd- oder Ni/MH-Batterien, zusammen mit dem Fachmann bekannten Aktivatoren und Hilfsstoffen eingesetzt.

Die Erfindung wird anhand der nachfolgenden Beispiele näher erläutert.

## A) Herstellung verschiedener Nickel-Mischhydroxide

### Beispiel 1

Probe A: (3:1 Ni:Dop., 3:1 Al:Co) $Ni_{0,75}Al_{0,188}Co_{0,063}(OH)_2*mCO_3*nH_2O$

0,1 mol $Ni(NO_3)_2*6 H_2O$ werden mit 0,025 mol $Al(NO_3)_3*9H_2O$ und 0,0083 mol $Co(NO_3)_2*6H_2O$ in 200 ml $H_2O$ gelöst und unter starkem Rühren (Rührgeschwindigkeit 400 U/min) zur Begünstigung eines erhöhten Luftsauerstoffeintrags in eine Vorlage aus 0,02 mol $Na_2CO_3$ + NaOH in 500 ml Wasser (pH = 12,5; 75°C) über einen Zeitraum von 2 h zudosiert. Während der Fällung und Nachreaktionszeit (ca. 3 h) werden pH und Temperatur konstant gehalten. Nach einer Alterungszeit (unter Rühren) von ca. 18 h wird die Suspension über einen Druckfilter filtriert und mit Wasser pH neutral gewaschen. Anschließend wird das Produktgemisch auf 750 ml verdünnt und sprühgetrocknet.

### Beispiel 2

Probe B: (3:1 Ni:Dop., 3:1 Al:Co) $Ni_{0,75}Al_{0,188}Co_{0,063}(OH)_2 *m CO_3*n H_2O$

10 mol $NiSO_4*7 H_2O$, 1,25 mol $Al_2(SO_4)_3*16 H_2O$ und 0,83 mol $CoSO_4*7 H_2O$ werden in 91 $H_2O$ gelöst. Die Lösung wird mit $H_2SO_4$ auf pH = 1 eingestellt, auf 75°C erwärmt und unter starkem Rühren (400 U/min) zur Begünstigung eines erhöhten Luftsauerstoffeintrags in eine Vorlage aus 15,58 mol $Na_2SO_3$ + NaOH in 25 1 Wasser (pH = 12,5; 65 - 70°C) dosiert (t = 70 min). Während der Fällung und Nachreaktionszeit (ca. 2 h) werden pH und Temperatur konstant gehalten. Nach einer Alterungszeit (unter Rühren) von ca. 16 h wird die Suspension über eine Membranfilterpresse abfiltriert und abgepreßt, anschließend bei 50°C im Umlufttrockenschrank getrocknet. Das gemahlene Zwischenprodukt wird auf einer Filternutsche portionsweise mit Wasser, Natronlauge vom pH = 12,5 und wiederum Wasser gewaschen und bei 50°C im Vakuumtrockenschrank bis zur Gewichtskonstanz getrocknet.

### Beispiel 3

Probe C

Zusammensetzung wie Probe B, jedoch kontinuierlicher Prozeß

| Ansatzgröße: | 180 mol (incl. 6 τ Vorlauf) |
|---|---|
| Reaktorvolumen: | 281 |
| Mittlere Verweilzeit: | 5 h |
| Volumenstrom: | 5,2 1/h |
| Stoffstrom: | 2 mol/h bezogen auf $Ni^{2+}$ |
| pH: | 12,5 |
| Temperatur: | 75°C |
| Ausgleichslauge: | NaOH, 7 mol/l |
| Carbonatstrom: | 1,321 mol/h |

Die gesammelte Reaktionssuspension wird nach einer Alterungszeit von ca. 18 h (unter Rühren) über eine Membranfilterpresse abfiltriert, abgepreßt und anschließend bei 50°C im Umlufttrockenschrank getrocknet. Das (gemahlene) Zwischenprodukt wird in Wasser resuspendiert und erneut über eine Membranfilterpresse abfiltriert und gewaschen. Das gewaschene Produkt wird bei 50°C im Umlufttrockenschrank bis zur Gewichtskonstanz getrocknet.

Die Analysenergebnisse der gemäß den obigen Beispielen hergestellten Proben A bis C sind in der nachfolgenden Tabelle 1 zusammengestellt.

Tabelle 1 Analytik der Proben A - C

| Beispiel | Ni (Gew.-%) | Al (Gew.-%) | Co(II) (Gew.-%) | Co(III) (Gew.-%) | $CO_3$ (Gew.-%) | $SO_4$ (ppm) | $NO_3$ (ppm) | TV* 105°C/2h (Gew.-%) |
|---|---|---|---|---|---|---|---|---|
| Probe A | 38,80 | 3,4 | 4,8 | 1,5 | 10,5 | - | <2000 | 5,2 |
| Probe B | 39,55 | 4,62 | 3,31 | 1,4 | 9,1 | 6350 | <4 | 4,94 |
| Probe C | 40,09 | 4,7 | 3,55 | 1,6 | 8,4 | 6800 | | 2,20 |

## Beispiel 4

Probe D: (3,32:1 Ni/Mg:Dop., 3:1 Al:Co) $Ni_{0,69}Mg_{0,074}Al_{0,174}Co_{0,058}(OH)_2$ *m $CO_3$*n $H_2O$

0,1 mol $Ni(NO_3)_2$*6 $H_2O$ werden mit 0,0107 mol $Mg(NO_3)_2$*6 $H_2O$ und 0,025 mol $Al(NO_3)_3$*9 $H_2O$ + 0,0083 mol $Co(NO_3)_2$*6 $H_2O$ in 100 ml $H_2O$ gelöst und unter starkem Rühren (400 U/min) zur Begünstigung eines erhöhten Luftsauerstoffeintrags in eine Vorlage (75°C) aus 0,02 mol $K_2CO_3$ + KOH in 150 ml Wasser (pH = 12,5) zudosiert (t = 10 min).Während der Fällung und Nachreaktionszeit (ca. 3 h) werden pH und Temperatur konstant gehalten. Nach einer Alterungszeit (unter Rühren) von ca. 15 h wird die Suspension über einen Druckfilter filtriert und mit Wasser pH neutral gewaschen. Anschließend wird das Produkt im Vakuum bei 50°C bis zur Gewichtskonstanz getrocknet.

## Vergleichsbeispiel 1

Vergleichsprobe E: (3:1 Ni:Dop., 3:1 Al:Co) $Ni_{0,75}Al_{0,188}Co_{0,063}(OH)_2$ *m $CO_3$*n $H_2O$

0,1 mol $Ni(SO_4)$*7 $H_2O$, 0,0125 mol $Al_2(SO_4)_3$*6 $H_2O$ und 0,0083 mol $Co(SO_4)$*7 $H_2O$ werden in 100 ml $H_2O$ gelöst ($N_2$-Begasung) unter unter starkem Rühren (400 U/min) in eine Vorlage (75°C, unter $N_2$ Atmosphäre) aus 0,245 mol $Na_2CO_3$ und NaOH in 200 ml Wasser (pH = 12,5) zudosiert. Während der Fällung und Nachreaktionszeit (ca. 2,5 h) werden pH-Wert und Temperatur konstant gehalten. Nach einer Alterungszeit (unter Rühren) von ca. 18h wird die Suspension über einen Druckfilter filtriert und mit Wasser pH neutral gewaschen, anschließend bei 50°C bis zur Gewichtskonstanz getrocknet.

Cobalt liegt in zweiwertiger Form neben Al(III) vor, wie es einem Material nach dem Stand der Technik gemäß EP 793 285 entspricht.

**Vergleichsbeispiel 2**

Vergleichsprobe F: (3:1 Ni:Dop., 3:1 Al:Co) $Ni_{0,75}Al_{0,188}Co_{0,063}(OH)_2$ 0,188 $NO_3$ *n $H_2O$

0,1 mol $Ni(NO_3)_2$*6 $H_2O$, 0,025 mol $Al(NO_3)_3$*9 $H_2O$ und 0,0083 mol $Co(NO_3)_2$*6 $H_2O$ werden mit 0,15 mol Hexamethylentetramin in 200 ml $H_2O$ gelöst und auf pH = 4 eingestellt. Unter starkem Rühren (400 U/min) wird langsam bis zur Siedetemperatur erhitzt und so lange weiteres Hexamethylentetramin in 0,075 mol Portionen (gelöst in 30 ml Wasser) zugegeben, bis eine Probe der überstehenden Lösung keine Fällung mehr mit Hexamethylentetramin zeigt. Nach einer Alterungszeit von etwa 96 h wird die Suspension über einen Druckfilter filtriert, mit Wasser pH neutral gewaschen und getrocknet. Ausbeute: 10,4 g (69,5 %).

Die Präparation erfolgte durch den Einsatz von Hexamethylentetramin unter reduzierenden Bedingungen. Reduzierende Bedingungen liegen auch bei dem kathodischen Abscheidungsprozeß, der bei Materialien nach dem Stand der Technik gemäß EP 793 285 angewendet wird, vor.

**Beispiel 5**

Probe G: (3:1 Ni:Dop., 3:1 Al:Co) $Ni_{0,75}Al_{0,188}Co_{0,063}(OH)_2$*$mSO_4$*$nH_2O$

0,1 mol $Ni(SO_4)$*$7H_2O$ werden mit 0,0125 mol $Al_2(SO_4)_3$*$6H_2O$ und 0,0083 moi $Co(SO_4)$*$7H_2O$ in 100 ml $H_2O$ gelöst und unter starkem Rühren (400 U/min) zur Begünstigung eines erhöhten Luftsauerstoffeintrags in eine Vorlage (75°C) aus NaOH in 150 ml Wasser (pH = 12,5) zudosiert (t = 10 min). Während der Fällung und Nachreaktionszeit (ca. 15 h) werden pH und Temperatur konstant gehalten. Nach einer Alterungszeit (unter Rühren) von ca. 17 h wird die Suspension über einen Druckfilter filtriert und mit Wasser pH neutral gewaschen. Anschließend wird das Produkt im Vakuum bei 50°C bis zur Gewichtskonstanz getrocknet.

Die Herstellung erfolgte carbonatfrei und führt so zum Einbau von Sulfat- anstelle von Carbonationen in die Zwischenschicht. Eine nachträgliche partielle Carbonatisierung durch Luftzutritt $(CO)_2$ wurde zugelassen.

**Beispiel 6**

Probe H: (2:1 Ni:Dop., 3:1 Al:Co) $Ni_{0,66}Al_{0,248}Co_{0,0825}(OH)_2$ *m $CO_3$*n $H_2O$

0,1 mol $Ni(NO_3)_2$*6 $H_2O$ werden mit 0,0375 mol $Al(NO_3)_3$*9 $H_2O$ und 0,0125 mol $Co(NO_3)_2$*6 $H_2O$ in 100 ml $H_2O$ gelöst und unter starkem Rühren (400 U/min) in eine Vorlage (75°C) aus 0,02 mol $Na_2CO_3$ + KOH in 150 ml Wasser (pH = 12,5) getropft (t = 3 h). Während der Fällung und Nachreaktionszeit (ca. 4 h) werden pH und Temperatur konstant gehalten. Nach einer Alterungszeit (unter Rühren) von ca. 15 h wird die Suspension über einen Druckfilter filtriert und mit Wasser pH neutral gewaschen, wobei die Suspension nie vollständig trockenfiltriert werden sollte. Anschließend wird das Produktgemisch bei 50°C/200 mbar bis zur Gewichtskonstanz getrocknet.

**Beispiel 7**

Probe I: (11:1 Ni:Dop., 2:1 Al:Co; (Überstruktur:33:2:1))

0,165 mol $Ni(NO_3)_2$*6 $H_2O$ werden mit 0,01 mol $Al(NO_3)_3$*9 $H_2O$ und 0,005 mol $Co(NO_3)_2$*6 $H_2O$ in 400 ml $H_2O$ gelöst. Unter starkem Rühren (400 U/min) und Einleitung von Luftsauerstoff über eine Fritte wird die Lösung in eine Vorlage aus 0,04 mol $Na_2NO_3$ + NaOH in 1000 ml $H_2O$ (pH = 12,5; 75°C) dosiert (t = 3 h). Während der Fällung und Nachreaktionszeit (unter Rühren) von ca. 18 h wird die Suspension über einen Druckfilter filtriert und mit Wasser pH neutral gewaschen, das Produktgemisch anschließend auf 1500 ml verdünnt und dann sprühgetrocknet.

**Beispiel 8**

Probe J: (3:1 Ni:Dop., 2:1 Al:Co; (Überstruktur:9:2:1))

0,09 mol $Ni(NO_3)_2$*6 $H_2O$, 0,02 mol $Al(NO_3)_3$*9 $H_2O$ und 0,01 mol $Co(NO_3)_2$*6 $H_2O$ werden in 200 ml $H_2O$ gelöst und unter Einleiten von Sauerstoff-/Luftgemisch in eine Vorlage aus 0,02 mol $Na_2CO_3$ und NaOH in 500 ml Wasser (pH = 12,5; 75°C) über einen Zeitraum von 2 h eingeleitet. Während der Fällung und Nachreaktionszeit (ca. 3 h) werden pH und Temperatur konstant gehalten. Nach 18 h Alterungszeit (unter Rühren) wird die Suspension über einen Druckfilter filtriert, pH neutral gewaschen und im Vakuumtrockenschrank bei 50°C getrocknet.

### Beispiel 9

Probe K (3:1 Ni:Dop., 2:1 Al:Fe)

0,09 mol $Ni(NO_3)_2$*6 $H_2O$ und 0,02 mol $Al(NO_3)_3$*9 $H_2O$ werden mit 0,0033 mol $Fe(NO_3)_2$*6 $H_2O$ und 0,0066 mol $Fe(NO_3)_3$*6 $H_2O$ gelöst und unter Rühren in eine Vorlage (35°C) aus 0,02 mol $Na_2CO_3$ + NaOH in 500 ml Wasser (pH = 12,5) dosiert (t = 2 h). Während der Fällung und Nachreaktionszeit (ca. 3 h) werden pH und Temperatur konstant gehalten. Nach 18 h Alterungszeit (unter Rühren) wird die Suspension über einen Druckfilter filtriert, pH neutral gewaschen und im Vakuumtrockenschrank bei 50°C getrocknet. Alle Schritte werden unter Stickstoffatmosphäre durchgeführt.

### Beispiel 10

Probe L: (2,9:1 Ni:Dop., 3:1 Al:Co)

In eine 3 1 fassende Versuchselektrolysezelle 1 (gemäß Fig. 6, jedoch ohne Solerückführung, die mit zwei Ni-Kathoden 2 und einer Ni-Anode 3 ausgerüstet ist, wurden bei 8 kontinuierlich 800 ml/h einer Elektrolytlösung der Zusammensetzung 63,5 g/l NaCl, 7,6 g/l $CoCl_2$ und 23,4 g/l $AlCl_3$ gepumpt. Die Elektrolyse wurde bei einer Stromdichte von ca. 65 mA/cm$^2$ (I=30 A), einer Temperatur von 20°C (Thermostat 5) mit einer anodischen Ni-Auflösung von ca. 32,8 g/h gefahren. Der pH-Wert wurde während der Elektrolyse durch automatische Zugabe 7 von 2,5-molarer Natronlauge bei 12,0 (pH-Messung 6) gehalten. Die Elektrolytlösung wurde über Pumpe 4 umgepumpt. In den Umpumpkreislauf wurde bei 11 Sauerstoff eingedüst. Die Elektrolyse lief über die gesamte Zeit stabil bei einer Spannung von ca. 3 V. Der Überlauf wurde über Pumpe 9 abgezogen und bei 10 abgenutscht. Der erhaltene Feststoff 12 wurde in einem Umlufttrockenschrank bei einer Temperatur von 60°C getrocknet. Das getrocknete Material wurde mit Hilfe einer Labormühle aufgemahlen (<500 µ) und mit einer 1-molaren $Na_2CO_3$-Lösung im Verhältnis zu dem trockenen Material 5:1 ca. 2 Stunden bei 70°C unter Rühren in einem Becherglas carbonatisiert. Danach wurde die das Produkt enthaltende Suspension abgenutscht und der resultierende Feststoff auf der Nutsche mit ca. 8 1 einer heißen (ca. 65°C) 1 g/l Natronlauge gewaschen. Das Produkt wurde abschließend im Umlufttrockenschrank bei einer Temperatur von 60°C getrocknet. Ausbeute: 80,3 g Nickelhydroxid-Material pro Stunde.

Die chemische Analyse des Produktes ergibt folgende Zusammensetzung:

| | | |
|---|---|---|
| Ni | 40,4 | Gew.-% |
| Al | 4,87 | Gew.-% |
| Co ges. | 3,52 | Gew.-%, (1,7 Gew.-% $Co^{3+}$) |
| $CO_3$ | 6,47 | Gew.-% |
| Cl | <50 | Ppm |
| $SO_4$ | <50 | Ppm |
| Na | 325 | Ppm. |

Die mittlere Teilchengröße (Mastersizer D50) betrug 16 µm, die BET-Oberfläche 3,3 m$^2$/g, die Dichte (He-Pyknometer) 2,51 g/cm$^3$ und die Klopfdichte 1,6 g/cm$^3$.

### Beispiel 11

Probe M: (4,5:1 Ni:Dop., 3:1 Al:Co)

Die Elektrolyse wurde analog Beispiel 10 durchgeführt. Die zugeführte Elektrolytlösung hatte die Zusammensetzung 57,4 g/l NaCl, 4,56 g/l $CoCl_2$ und 14,01 g/l $AlCl_3$. Der pH-Wert wurde bei 12,5 gehalten. Die Spannung betrug 3,2V; die anodische Ni-Auflösung 29,5 g/h.

Der Überlauf aus der Elektrolysezelle wurde über 6 Stunden gesammelt, etwa 20 Stunden durch Stehenlassen gealtert und anschließend abgenutscht. Der resultierende Feststoff wurde auf der Nutsche mit ca. 3,8 1 einer 1 g/l Natronlauge, danach mit ca. 1,91 einer 1-molaren $Na_2CO_3$-Lösung und anschließend wieder mit ca. 3,8 1 einer 1 g/l Natronlauge gewaschen. Die Temperatur der Waschlösungen betrug ca. 20°C. Das Produkt wurde abschließend in einem Umlufttrockenschrank bei einer Temperatur von ca. 60°C getrocknet. Das getrocknete Material wurde mit Hilfe einer Labormühle aufgemahlen (<500 µ) und abschließend analysiert. Ausbeute: 453 g Nickelhydroxid-Material.

Die chemische Analyse ergab folgende Zusammensetzung:

| Ni | 43,4 | Gew.-% |
| Al | 3,33 | Gew.-% |
| Co ges. | 2,42 | Gew.-%, (1,12 Gew.-% $Co^{3+}$) |
| $CO_3$ | 9,09 | Gew.-% |
| Cl | 510 | Ppm |
| $SO_4$ | <50 | Ppm |
| Na | 0,83 | ppm. |

Die mittlere Teilchengröße (Mastersizer D50) betrug 38 $\mu$m, die BET-Oberfläche <1 $m^2$/g, die physikalische Dichte (He-Pylenometer) 2,45 g/$cm^3$, die Klopfdichte 1,6 g/$cm^3$ und der Trocknungsverlust (105°C, 2H) 4,75 Gew.-%.

## Beispiel 12

Probe N: (4:1 Ni:Dop, 3:1 Al:Co)

Es wurde eine Elektrolysezelle mit 400 1 Fassungsvermögen eingesetzt. Die Elektrolyse wurde analog Beispiel 10 durchgeführt. Es wurden 55 l/h einer Elektrolytlösung der Zusammensetzung 52,7 g/l NaCl, 5,5 g/l $CoCl_2$ und 17,0 g/l $AlCl_3$ zugeführt. Der Elektrolysestrom betrug 2000 A bei einer Anodenstromdichte von 69 mA/$cm^2$. Die Ni-Auflösung betrug 2187 g/h, der pH-Wert 12,0. Nach einer Vorlaufzeit von ca. 20 h wurde die ablaufende Suspension 28 Stunden lang gesammelt. Diese 28stündige Sammelprobe (1648 1) wurde anschließend abgenutscht und der resultierende Feststoff in einem Umlufttrockenschrank bei einer Temperatur von 70 bis 80°C getrocknet. Das getrocknete Material wurde mit Hilfe einer Kegelmühle aufgemahlen (<1000 $\mu$m) und mit einer 1-molaren $Na_2CO_3$-Lösung im Verhältnis zu dem trockenen Material 5:1 ca. 2 Stunden bei 70°C unter Rühren in einem 450 1 fassenden Reaktor carbonatisiert. Danach wurde die Suspension abgenutscht und der resultierende Feststoff auf der Nutsche mit ca. 2,5 $m^3$ einer heißen (ca. 65°C) 1 g/l Natronlauge gewaschen. Das Produkt wurde abschließend im Umlufttrockenschrank bei einer Temperatur von 70 bis 80°C getrocknet.

Die chemische Analyse ergab folgende Zusammensetzung des Produktes:

| Ni | 44,40 | Gew.-% |
| Al | 3,75 | Gew.-% |
| Co ges. | 2,82 | Gew.-%, (2,0 Gew.-% $Co^{3+}$) |
| $CO_3$ | 8,33 | Gew.-% |
| Cl | 360 | ppm |
| $SO_4$ | <50 | ppm |
| Na | 270 | ppm. |

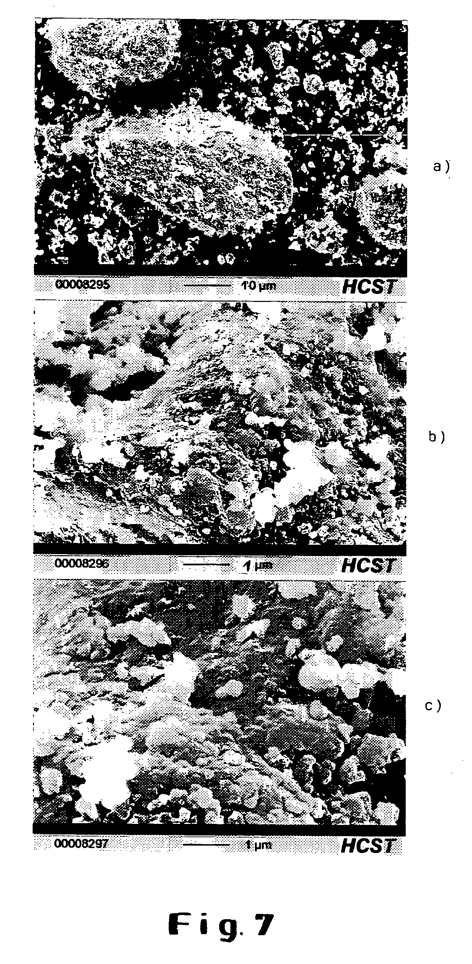

Die mittlere Teilchengröße (Mastersizer D50) betrug 51,8 $\mu$m, die BET-Oberfläche 6,35 $m^2$/g, die physikalische Dichte (He-Pyknometer) 2,7 g/$cm^3$ und die Klopfdichte 1,8 g/$cm^3$. Fig. 7 zeigt eine REM-Aufnahme des Pulvers.

## B) Elektrochemische Charakterisierung

Zur elektrochemischen Charakterisierung der Proben wurde mit fünfstündigem Lade- und Entlade-Strom in 30%iger KOH gegen Hg/HgO bei einem Ladefaktor von 1,5 zyklisiert. Die Elektrodenmasse aus Nickel-Mischhydroxid (Aktivmaterial), 33 % Graphit als Leitzusatz sowie Hydroxypropylmethylzellulose als Binder wurde in Nickelschaum als Substrat einpastiert.

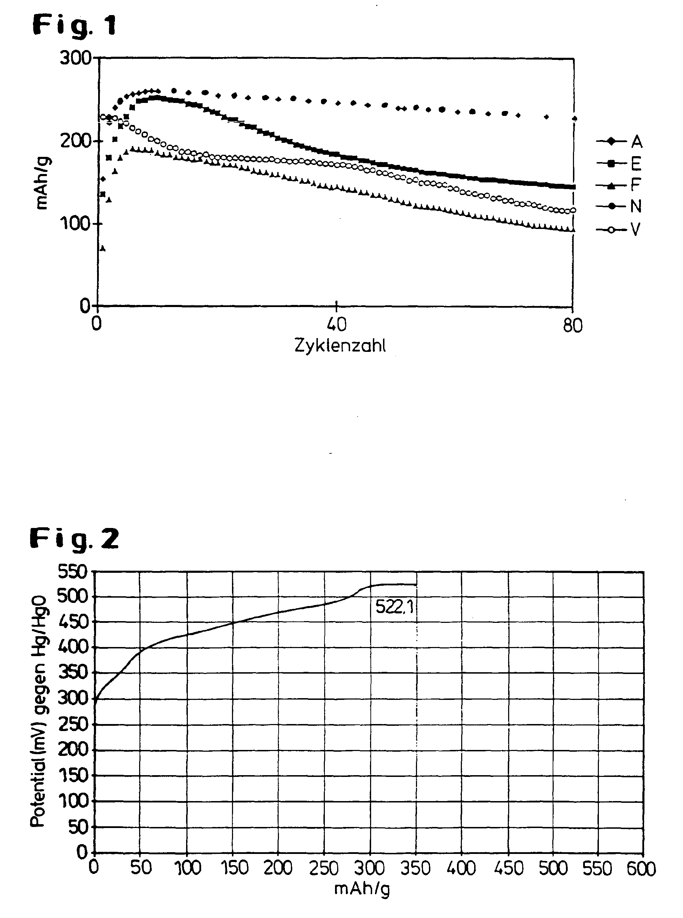

Figur 1 zeigt das Zyklenverhalten von Proben A und N und den Vergleichsproben E und F gemäß dem Stand der Technik (EP 0 793 285) sowie von Vergleichsprobe V, einem Co(III)-, Mn(III)- und Al(III)-haltigen Nickelhydroxidpulver gemäß EP 0 712 174, im Halbzellentest.

Die Vergleichsproben E und F gemäß EP 0 793 285 enthalten, da als Ausgangsverbindungen zweiwertiges Cobalt z.B. in Kombination mit dreiwertigem Aluminium eingesetzt und weiterhin kein Oxidationsmittel verwendet wird, zweiwertige Cobaltneben dreiwertigen weiteren Zusatzkationen. Der EP 0 793 285 sind keine Angaben über Zyklenverhalten und Kapazitätswerte zu entnehmen, es wurden daher Vergleichsproben angefertigt: Die Proben E und F wurden unter Erhalt der Zweiwertigkeit für Cobalt hergestellt, einmal unter $N_2$-Atmosphäre (E) und einmal unter reduzierenden Bedingungen (F), und als Stand der Technik der erfindungsgemäßen Probe A gegenübergestellt.

Wie Figur 1 zeigt, sind sowohl die Kapazitätswerte als auch das Zyklenverhalten von Proben A und N, in denen Co(III)- neben Co(II)-Ionen vorliegen, den Materialien nach dem Stand der Technik, in denen die Cobaltionen rein zweiwertig vorliegen, deutlich überlegen. Der positive Einfluß der Mischvalenz für Cobalt wird besonders durch Vergleich mit Probe E deutlich, die nicht unter reduzierenden Bedingungen, sondern nur unter Sauerstoffausschluß hergestellt wurde. Hier ist eine leichte Anoxidation der Oberfläche bei der Aufarbeitung vorstellbar, die die Verbesserung gegenüber dem unter reduzierenden Bedingungen hergestellten Material (Probe F) erklären könnte. Auch gegenüber Vergleichsprobe V zeigen Proben A und N deutliche Verbesserungen hinsichtlich Kapazität und Zyklenstabilität.

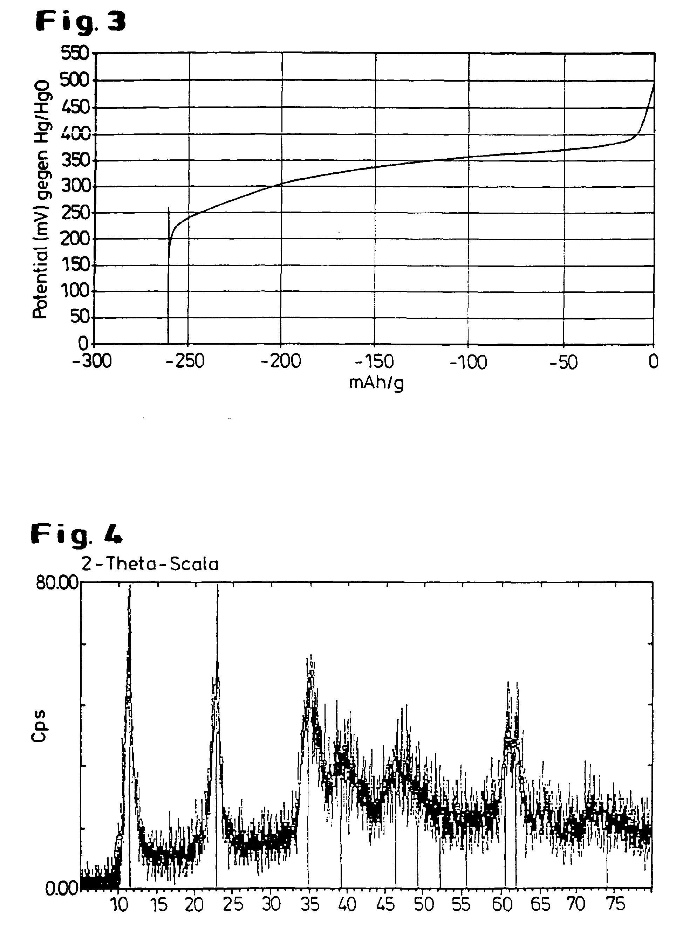

In den Figuren 2 und 3 ist der Potentialverlauf von Probe A dargestellt, wobei Figur 2 die Ladekurve und Figur 3 die Entladekurve im 10. Zyklus, jeweils gegen Hg/HgO, zeigt.

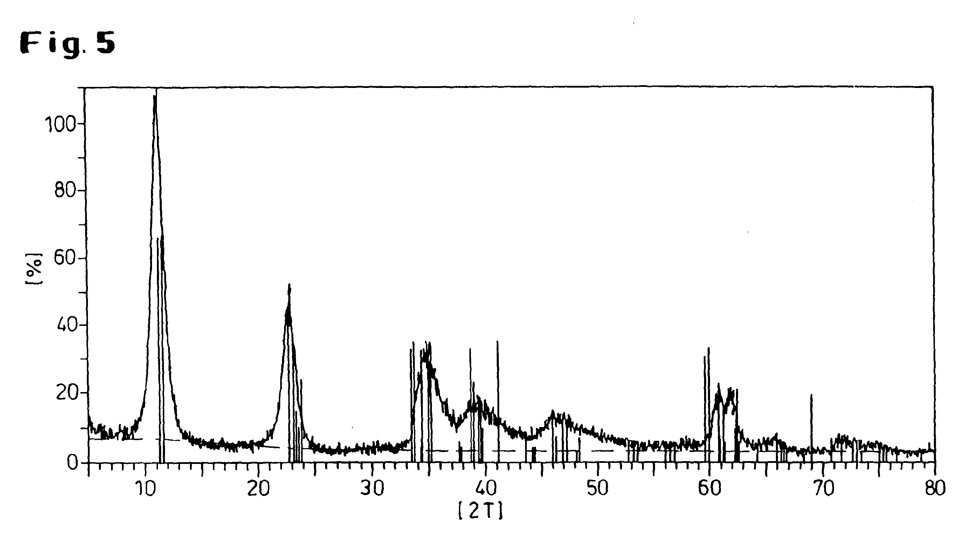

Das Röntgenbeugungsspektrum der Probe A ist in Figur 4 dargestellt. Das Material der Probe A zeigt die Reflexe des Hydrotalcittyps mit einem Schichtabstand von ca. 7,8 Å. Es liegt eine im Gegensatz zum $\beta$-Ni(OH)$_2$ (Brucittyp) aufgeweitete Schichtstruktur vor. Fig. 5 zeigt das Röntgenbeugungsspektrum der Probe L.

**Patentansprüche**

1. Nickel-Mischhydroxid mit Ni als Hauptelement und mit einer Schichtstruktur, umfassend

   a) mindestens ein Element M$_a$ aus der Gruppe Fe, Cr, Co, Ti, Zr und Cu, das in zwei unterschiedlichen Oxidationsstufen, die sich hinsichtlich der Anzahl der Außenelektronen um ein Elektron unterscheiden, vorliegt; und wobei der Oxidationsgrad $\alpha$ des Elementes M$_a$, definiert gemäß der folgenden Formel (I), im Bereich von 0,25 bis 0,75, liegt:

$$\alpha = \frac{M_a^{+(x+1)}}{M_a^{+(x+1)} + M_a^{+x}} \tag{I},$$

   worin M$_a^{+(x+1)}$ die Molmenge des Elements M$_a$ in der böheren Oxidationsstufe und M$_a^{+(x)}$ die Molmenge des Elements M$_a$ in der niedrigeren Oxidationsstufe bedeuten, und x eine Zahl zwischen 1 und 3 ist.
   b) mindestens ein in der 3-wertigen Oxidationsstufe vorliegendes Element M$_b$ aus der Gruppe bestehend aus B, Al, Ga, In Sc, Y oder La;
   c) wahlweise mindestens ein in der 2-wertigen Oxidationsstufe vorliegendes Element M$_c$ aus der Gruppe Mg, Ca, Sr, Ba und Zn;
   d) neben dem Hydroxid, mindestens ein zusätzliches Anion aus der Gruppe Halogenide (vorzugsweise Fluorid oder Chlorid), Carbonat, Sulfat, Acetat, Oxalat, Borat und Phosphat in einer zur Wahrung der Elektroneutralität des Mischhydroxids ausreichenden Menge; und
   e) Hydratätionswasser in einer die jeweilige Struktur des Mischhydroxids stabilisierenden Menge.

2. Nickel-Mischhydroxid nach Anspruch 1, wobei der Anteil des Ni 60 bis 92 mol-%, vorzugsweise 65 bis 85 mol-%, weiter vorzugsweise 75 bis 80 mol-%, und der Gesamtanteil der Elemente M$_a$, M$_b$ und M$_c$ 40 bis 8 mol-%, vorzugsweise 35 bis 15 mol-%, weiter vorzugsweise 25 bis 20 mol-%, beträgt, jeweils bezogen auf die Gesamtmenge an Ni. M$_a$. M$_b$ und M$_c$.

3. Nickcl-Mischhydroxid nach Anspruch 1 und/oder Anspruch 2, wobei der Anteil des Elements M$_a$ 10 bis 40 mol-%, vorzugsweise 20 bis 30 mol-%, beträgt, bezogen auf die Gesamtmenge der Elemente M$_a$, M$_b$ und M$_c$.

4. Nickel-Mischhydroxide nach mindestens einem der Ansprüche 1 bis 3, wobei der Anteil des Elements M$_c$ 1 bis 30 mol-% beträgt, bezogen auf die Gesamtmenge der Elemente M$_a$, M$_b$ und M$_c$.

5. Nickel-Mischhydroxid nach mindestens einem der Ansprüche 1 bis 4 in Form eines Pulvers mit einer durchschnittlichen Teilchengröße von 1 bis 100 $\mu$m.

6. Verfahren zur Herstellung der Nickel-Mischbydroxide gemäß den Ansprüchen 1 bis 5, umfassend das Umsetzen der zur Erzielung der jeweiligen Mischhydroxide erforderlichen Reaktionskomponenten in Form von wasserlöslichen Salzen des Ni und der Elemente M$_a$, M$_b$ und wahlweise M$_c$ in einem basischen, wäßrigen Medium zur Kopräzipitation hydroxidischer Reaktionsprodukte unter Bildung einer homogenen Suspension dieser Reaktionsprodukte, wobei entweder wasserlösliche Salze des Elements $M_a$ in unterschiedlichen Oxidationsstufen eingesetzt werden oder ein wasserlösliches Salz des Elements $M_a$ in der niedrigeren Oxidationsstufe eingesetzt und eine partielle Oxidation bis zum Erreichen des erwünschten Verhältnisses zwischen den unterschiedlichen Oxidationsstufen des Elements $M_a$ durchgeführt wird oder ein wasserlösliches Salz des Elements $M_a$ in der höhereren Oxidationsstufe eingesetzt und eine partielle Reduktion bis zum Erreichen des erwünschten Verhältnisses zwischen den unterschiedlichen Oxidationsstufen des Elements $M_a$ durchgeführt wird, Abtrennen des Wassers von der Suspension und Trocknen der Reaktionsprodukte.

7. Verfahren nach Anspruch 6, wobei mindestens eine der Reaktionskomponenten durch anodische Oxidation des entsprechenden Metalls in das wäßrige Medium eingeführt wird.

8. Verfahren nach Anspruch 6 oder 7, wobei die Umsetzung bei einem pH im Bereich von 8 bis 13 durchgeführt wird.

9. Verfahren nach einem der Ansprüche 6 bis 8, wobei die partielle Oxidation durch Verwendung von Sauerstoff, $H_2O_2$, Hypochlorit, Peroxodisulfaten oder Percarbonaten als Oxidationsmittel durchgeführt wird.

10. Verwendung der Nickel-Mischhydroxide gemäß den Ansprüchen 1 bis 5 als Kathodenmaterial in alkalischen Batterien.

## Claims

1. Nickel mixed hydroxide with Ni as the main element and with a layer structure, comprising

   a) at least one element $M_a$ from the group comprising Fe, Cr, Co, Ti, Zr and Cu which is present in two different oxidation states which differ by one electron in terms of the number of outer electrons;
   and wherein the degree of oxidation $\alpha$ of the element $M_a$, defined according to the following formula (I), is in the range from 0.25 to 0.75:

$$\alpha \ = \ \frac{M_a^{+(x+1)}}{M_a^{+(x+1)} + \ M_a^{+x}} \qquad (I),$$

   wherein $M_a^{+(x+1)}$ means the molar quantity of the element $M_a$ in the higher oxidation state, and $M_a^{+(x)}$ the molar quantity of the element $M_a$ in the lower oxidation state, and x is a number between 1 and 3;
   b) at least one element $M_b$ from the group consisting of B, Al, Ga, In Sc, Y or La present in the trivalent oxidation state;
   c) optionally at least one element $M_c$ from the group comprising Mg, Ca, Sr, Ba and Zn present in the divalent oxidation state;
   d) apart from the hydroxide, at least one additional anion from the group comprising halides (preferably fluoride or chloride), carbonate, sulfate, acetate, oxalate, borate and phosphate in a quantity sufficient to preserve the electroneutrality of the mixed hydroxide; and
   e) water of hydration in a quantity which stabilises the relevant structure of the mixed hydroxide.

2. Nickel mixed hydroxide according to claim 1, wherein the proportion of Ni is 60 to 92 mol %, preferably 65 to 85 mol %, more preferably 75 to 80 mol % and the total proportion of the elements $M_a$, $M_b$ and $M_c$ is 40 to 8 mol %, preferably 35 to 15 mol %, more preferably 25 to 20 mol %, in each case based on the total amount of Ni, $M_a$, $M_b$ and $M_c$.

3. Nickel mixed hydroxide according to claim 1 and/or claim 2, wherein the proportion of the element $M_a$ is 10 to 40 mol %, preferably 20 to 30 mol %, based on the total amount of the elements $M_a$, $M_b$ and $M_c$.

4. Nickel mixed hydroxides according to at least one of claims 1 to 3, wherein the proportion of the element $M_c$ is 1 to 30 mol %, based on the total amount of elements $M_a$, $M_b$ and $M_c$.

5. Nickel mixed hydroxide according to at least one of claims 1 to 4 in the form of a powder with an average particle size from 1 to 100 $\mu$m.

6. Process for the preparation of the nickel mixed hydroxides according to claims 1 to 5, comprising the reaction of the reaction components required to obtain the relevant mixed hydroxides in the form of water-soluble salts of Ni and of the elements $M_a$, $M_b$ and optionally $M_c$ in a basic, aqueous medium for the coprecipitation of hydroxide reaction products with the formation of a homogeneous suspension of said reaction products, wherein either water-soluble salts of the element $M_a$ are used in different oxidation states or a water-soluble salt of the element $M_a$ is used in the lower oxidation state and a partial oxidation is carried out until the desired ratio is obtained between the different oxidation states of the element $M_a$, or a water-soluble salt of the element $M_a$ is used in the higher oxidation state and a partial reduction is carried out until the desired ratio is obtained between the different oxidation states of the element $M_a$, separation of the water from the suspension, and drying of the reaction products.

7. Process according to claim 6, wherein at least one of the reaction components is introduced into the aqueous medium by anodic oxidation of the corresponding metal.

8. Process according to claim 6 or 7, wherein the reaction is carried out at a pH in the range from 8 to 13.

9. Process according to one of claims 6 to 8, wherein partial oxidation is carried out by using oxygen, $H_2O_2$, hypochlorite, peroxodisulfates or percarbonates as oxidising agent.

10. Use of the nickel mixed hydroxides according to claims 1 to 5 as cathode material in alkaline batteries.


**Revendications**

1. Hydroxyde mixte de nickel avec Ni comme élément principal et avec une structure stratifiée comprenant

   a) au moins un élément $M_a$ du groupe Fe, Cr, Co, Ti, Zr et Cu, qui existe dans deux degrés d'oxydation différents qui diffèrent d'un électron concernant le nombre d'électrons externes ;
   et où le degré d'oxydation $\alpha$ de l'élément $M_a$, défini selon la formule (I) suivante, est situé dans le domaine de 0,25 à 0,75 :

$$\alpha = \frac{M_a^{+(x+1)}}{M_a^{+(x+1)} + Ma^{+x}} \qquad (I),$$

   où $M_a^{+(x+1)}$ représente la quantité molaire de l'élément $M_a$ dans le degré d'oxydation supérieur et $M_a^{+(x)}$ représente la quantité molaire de l'élément $M_a$ dans le degré d'oxydation inférieur, et x est un nombre entre 1 et 3,
   b) au moins un élément $M_b$ existant dans le degré d'oxydation trivalent du groupe consistant en B, Al, Ga, In, Sc, Y ou La ;
   c) au choix au moins un élément $M_c$ existant dans le degré d'oxydation divalent du groupe Mg, Ca, Sr, Ba et Zn ;
   d) outre l'hydroxyde, au moins un anion supplémentaire du groupe halogénures (de préférence fluorure ou chlorure), carbonate, sulfate, acétate, oxalate, borate et phosphate en une quantité suffisante pour maintenir l'électroneutralité de l'hydroxyde mixte ; et
   e) de l'eau d'hydratation en une quantité stabilisant la structure correspondante de l'hydroxyde mixte.

2. Hydroxyde mixte de nickel selon la revendication 1 où la proportion de Ni est 60 à 92 mol %, de préférence 65 à 85 mol %, de préférence encore 75 à 80 mol %, et la proportion totale des éléments $M_a$, $M_b$ et $M_c$ est 40 à 8 mol %, de préférence 35 à 15 mol %, de préférence encore 25 à 20 mol %, dans chaque cas par rapport à la quantité totale de Ni, $M_a$, $M_b$ et $M_c$.

3. Hydroxyde mixte de nickel selon la revendication 1 et/ou la revendication 2 où la proportion de l'élément $M_a$ est 10 à 40 mol %, de préférence 20 à 30 mol %, par rapport à la quantité totale des éléments $M_a$, $M_b$ et $M_c$.

4. Hydroxydes mixtes de nickel selon au moins l'une des revendications 1 à 3 où la proportion de l'élément $M_c$ est 1 à 30 mol % par rapport à la quantité totale des éléments $M_a$, $M_b$ et $M_c$.

**5.** Hydroxyde mixte de nickel selon au moins l'une des revendications 1 à 4 sous forme d'une poudre ayant une taille de particule moyenne de 1 à 100 $\mu$m.

**6.** Procédé pour produire les hydroxydes mixtes de nickel selon les revendications 1 à 5 comprenant la réaction des composants réactionnels nécessaires pour l'obtention des hydroxydes mixtes correspondants sous forme de sels hydrosolubles de Ni et des éléments $M_a$, $M_b$ et au choix $M_c$ dans un milieu aqueux basique pour la coprécipitation de produits réactionnels hydroxydiques avec formation d'une suspension homogène de ces produits réactionnels, où des sels hydrosolubles de l'élément $M_a$ dans des degrés d'oxydation différents sont utilisés ou bien un sel hydrosoluble de l'élément $M_a$ dans le degré d'oxydation inférieur est utilisé et une oxydation partielle jusqu'à l'obtention du rapport souhaité entre les différents degrés d'oxydation de l'élément $M_a$ est conduite ou bien un sel hydrosoluble de l'élément $M_a$ dans le degré d'oxydation supérieur est utilisé et une réduction partielle jusqu'à l'obtention du rapport souhaité entre les différents degrés d'oxydation de l'élément $M_a$ est conduite, la séparation de l'eau de la suspension et le séchage des produits réactionnels.

**7.** Procédé selon la revendication 6 où au moins l'un des composants réactionnels est introduit dans le milieu aqueux par oxydation anodique du métal correspondant.

**8.** Procédé selon la revendication 6 ou 7 où la réaction est conduite à un pH dans le domaine de 8 à 13.

**9.** Procédé selon l'une des revendications 6 à 8 où l'oxydation partielle est conduite par l'utilisation d'oxygène, de $H_2O_2$, d'hypochlorite, de peroxodisulfates ou de percarbonates comme oxydant.

**10.** Utilisation des hydroxydes mixtes de nickel selon les revendications 1 à 5 comme matière de cathode dans des batteries alcalines.

# Fig. 1

# Fig. 2

# Fig. 3

# Fig. 4

# Fig. 5

EP 1 145 346 B1

# Fig. 6

a)

b)

c)

Fig. 7